# EUROPÄISCHE PATENTSCHRIFT

(11) **EP 2 368 421 B1**
(45) Veröffentlichungstag und Bekanntmachung des Hinweises auf die Patenterteilung: **17.04.2013**
(21) Anmeldenummer: 11002159.9
(22) Anmeldetag: 16.03.2011
(51) Int. Cl.: A01G 13/02

(54) **Hagelschutzanordnung für Obstanlagen**
Hail protection assembly for orchards
Dispositif de protection contre la grêle pour vergers

(30) Priorität: 24.03.2010 DE 102010012679
(43) Veröffentlichungstag der Anmeldung: 28.09.2011
(73) Patentinhaber: Braendlin, Oswald, 79588 Efringen-Kirchen (DE)
(72) Erfinder: Braendlin, Oswald, 79588 Efringen-Kirchen (DE)
(74) Vertreter: Zimmermann, Günter

(56) Entgegenhaltungen:
- EP-A1- 1 618 782
- DE-U1-202008 014 784
- US-A- 4 390 054

## Beschreibung

Die Erfindung bezieht sich auf eine Hagelschutzanordnung für Obstanlagen mit den Merkmalen des Oberbegriffs des Anspruchs 1.

Bei einer derartigen bekannten Hagelschutzanordnung befindet sich über jeder Pfostenreihe ein Hagelschutznetz, welches sich vom oberen Pfostenende ausgehend dachartig zum Boden hin erstreckt bis in etwa zwei Drittel der Pfostenhöhe. Die bodennahen Enden der Hagelschutznetze jeder Pfostenreihe treffen sich etwa in der Mitte zwischen den Pfostenreihen und sind über sogenannte Traufplaketten miteinander verbunden. Um die Hagelschutznetze bei gutem Wetter in ihre Ruheposition oberhalb der Pfosten zu bringen, muss jede Traufplakette geöffnet werden und anschließend die Hagelschutznetze aufgerollt werden. Nachteiligerweise ist dies ein sehr zeitaufwendiger Arbeitsvorgang, welcher für ein Hektar Obstanlagen etwa 15 Stunden erfordert.

Ferner ist in der EP 1618782 eine Hagelschutzanordnung beschrieben, in der die Netze je nach Drehrichtung eines Antriebselements in einer Schutzstellung auf den jeweiligen Pfosten aufgespannt werden bzw. in einer Ruhestellung paketartig zwischen den beiden Netzrändern Zusammengeschoben werden.

Die Aufgabe der Erfindung wird somit darin gesehen, die Hagelschutzanordnung der eingangs genannten Art derart weiter zu entwickeln, dass sie bei plötzlicher Wetterverschlechterung in kurzer Zeit einsatzbereit ist und auch in kurzer Zeit in eine Ruheposition gebracht werden kann.

Zur Lösung dieser Aufgabe wird bei einer Hagelschutzanordnung gemäß dem Oberbegriff des Anspruchs 1 erfindungsgemäß vorgeschlagen, dass mindestens ein erstes, oberhalb der Hagelschutznetze angeordnetes und parallel zum Querdraht verlaufendes Zugelement und mindestens ein zweites, unterhalb der Hagelschutznetze angeordnetes und parallel zum Querdraht verlaufendes Zugelement jeweils zum Öffnen und Schließen der Hagelschutznetze vorgesehen sind, wobei das mindestens eine erste Zugelement über ein erstes Verbindungselement mit einer ersten Längsseite je eines Hagelschutznetzes verbunden ist und das mindestens eine zweite Zugelement über ein zweites Verbindungselement mit der anderen zweiten Längsseite desselben Hagelschutznetzes verbunden ist.

Durch Betätigen des ersten und des zweiten Zugelementes werden alle Hagelschutznetze gleichzeitig entweder in ihre Ruheposition oder in ihre Arbeitsposition gebracht. Weiterhin werden die Hagelschutznetze durch die Zugelemente entweder in der Ruheposition oder in der Arbeitsposition sicher und fest gehalten. Mit der erfindungsgemäßen Hagelschutzanordnung entfällt somit das zeitaufwendige Befestigen oder Lösen der Traufplaketten zum Verbinden der einzelnen Hagelschutznetze, sodass die Hagelschutznetze in kurzer Zeit in ihre entsprechende gewünschte Position gebracht werden können.

Eine Ausführungsform der Erfindung sieht vor, dass jeweils zum Öffnen und zum Schließen der Hagelschutznetze die Zugrichtung des mindestens einen ersten Zugelementes zur Zugrichtung des mindestens einen zweiten Zugelementes entgegengerichtet ist oder unter Verwendung einer Umlenkrolle für ein Zugelement gleichgerichtet ist. Bei der ersten Alternative wird an den gegenüberliegenden Enden des ersten Zugelementes und des zweiten Zugelementes gezogen. Bei der zweiten Alternative wird an den gleichen Enden des ersten Zugelementes und des zweiten Zugelementes gezogen um das Öffnen und Schließen der Hagelschutznetze zu bewirken.

Damit die Zugelemente möglichst reibungsfrei verlaufen, sieht eine weitere Ausführungsform der Erfindung vor, dass an jedem Firstdraht für das mindestens eine erste Zugelement ein erstes Führungselement und für das mindestens eine zweite Zugelement ein zweites Führungselement vorgesehen sind. Die Führungselemente dienen auch als Anschlag für die in der Ruheposition zusammen gefalteten Hälften der Hagelschutznetze, da die Hagelschutznetze durch die Führungselemente nicht hindurchgezogen werden können. Vorteilhafterweise sind das erste Führungselement oberhalb der Hagelschutznetze und das zweite Führungselement unterhalb der Hagelschutznetze angeordnet. Dadurch können die Hagelschutznetze in vertikaler Richtung gesehen nach oben und unten gezogen werden, sodass die Hagelschutznetze auch übereinander gezogen werden können. Zweckmäßigerweise sind hierbei benachbarte Hagelschutznetze im Bereich zwischen den Pfostenreihen überlappend angeordnet, um ein Eindringen von Hagel in die Obstanlage zu verhindern.

Bei starken Belastungen wie beispielsweise durch Winddruck oder durch eine große Masse von aufliegenden Hagelkörnern sollten die Hagelschutznetze dem Druck etwas nachgeben können, damit die Netze nicht reißen. Eine weitere Ausführungsform der Erfindung sieht deshalb vor, dass die Verbindungselemente elastisch sind und Befestigungsmittel zum Anbringen an den Hagelschutznetzen aufweisen. Als elastische Verbindungselemente können Gummibänder oder Gummischnüre verwendet werden. Das Befestigungsmittel sollte geeignet sein, möglichst schnell und sicher an dem Hagelschutznetz angebracht zu werden. Geeignet sind hier beispielsweise sogenannte Stirnplaketten aus Plastik, welche Zähne aufweisen, die durch die Löcher des Hagelschutznetzes hindurchgreifen und dann clippartig geschlossen werden.

Bei den Pfostenreihen beträgt der Abstand zwischen den Pfosten etwa zehn Meter und eine Pfostenreihe von einem Hektar weist zehn Pfosten auf. Über jeden Pfosten und parallel zu dem Querdraht verläuft jeweils ein erstes Zugelement und ein zweites Zugelement. Eine weitere Ausführungsform der Erfindung sieht deshalb vor, dass mehrere erste Zugelemente und mehrere zweite Zugelemente vorgesehen sind. In Blickrichtung der Pfostenreihe gesehen befinden sich dann zehn Kombinationen von jeweils einem ersten Zugelement und einem zweiten Zugelement parallel hintereinander, wobei immer zwei Verbindungselemente von jeder Kombination mit demselben Hagelschutznetz verbunden sind. Mit dieser Anordnung kann ein Hagelschutznetz von 100 Meter Länge in Reihenrichtung der Pfostenreihe gesehen sicher gehalten und betätigt werden. Es ist auch denkbar, dass jedes Verbindungselement aus einem Dublett von zwei Verbindungselementen besteht, welche rechts und links von dem jeweiligen Zugelement an dem Hagelschutznetz befestigt sind.

Um das Betätigen der Hagelschutznetze zu vereinfachen und gleichzeitig zu beschleunigen, sieht eine weitere Ausgestaltung der Erfindung vor, dass an einem Randbereich der Hagelschutzanordnung eine Auf- und Abwickelvorrichtung für die ersten Zugelemente und die zweiten Zugelemente vorgesehen ist. Bei Betätigung der Auf- und Abwickelvorrichtung werden damit beispielsweise alle ersten Zugelemente betätigt, so dass entlang der Pfostenreihen alle Hagelschutznetze gleichzeitig betätigt werden. Am gegenüberliegenden Randbereich der Hagelschutzanordnung kann eine zweite Auf- und Abwickelvorrichtung für die zweiten Zugelemente angeordnet sein, mit welchem dann die zweiten Zugelemente in Gegenrichtung zu den ersten Zugelementen gezogen werden.

Die Erfindung wird nachstehend anhand der Zeichnung näher erläutert. Die Zeichnung zeigt ein Ausführungsbeispiel der Erfindung. Hierbei stellen dar:
Fig. 1 eine abgebrochene schematische Seitenansicht und

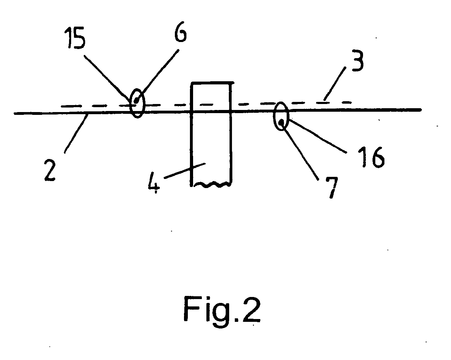

Fig. 2 eine Detailansicht aus Fig. 1 mit den Führungselementen.

Die Hagelschutzanordnung weist mehrere nebeneinander angeordnete Pfostenreihen 1 auf. Über jede Pfostenreihe 1 verläuft ein Firstdraht 2, an welchem ein Hagelschutznetz 3 befestigt ist. Ein zweiter Firstdraht 2 für das Hagelschutznetz 3 auf der angrenzenden gegenüberliegenden Seite verläuft ebenfalls über die angrenzende Pfostenreihe 1. Zusätzlich zu dem Firstdraht 2 verläuft quer dazu an jedem Pfosten 4 ein Querdraht 5, welcher sich ca. 10 cm unter dem oberen Ende des Pfostens 4 befindet. Der Querdraht 5 dient als Auflage für die Hagelschutznetze und bewirkt mehr Stabilität. Entlang jeder Pfostenreihe 1 gesehen sind somit eine Vielzahl von Querdrähten 5 hintereinander angeordnet. Parallel zu jedem Querdraht 5 verläuft ein erstes Zugelement 6 und ein zweites Zugelement 7. Das erste Zugelement 6 ist oberhalb jedes Hagelschutznetzes 3 angeordnet und das zweite Zugelement 7 ist unterhalb jedes Hagelschutznetzes 3 angeordnet. Das erste Zugelement 6 ist über ein erstes Verbindungselement 8 mit einer ersten Längsseite 9 des Hagelschutznetzes 3 verbunden. Das zweite Zugelement 7 ist über ein zweites Verbindungselement 10 mit der anderen zweiten Längsseite 11 desselben Hagelschutznetzes 3 verbunden. Benachbarte Hagelschutznetze 3 im mittigen Bereich zwischen den Pfostenreihen 1 sind überlappend angeordnet. Die Verbindungselemente 8, 10 sind elastisch und bestehen aus einem Gummiband. An jedem Verbindungselement 8, 10 ist ein Befestigungsmittel 12 zum Befestigen an dem Hagelschutznetz 3 angeordnet. Die Verbindungselemente 8, 10 können in die Zugelemente 6, 7 eingeknotet sein oder in sonstiger Weise rutschfest befestigt sein. Die Verbindungselemente 8, 10 können in die Befestigungsmittel 12 beispielsweise rutschfest eingeklemmt sein. Die Zugelemente 6, 7 können Schnüre, Seile, Kordeln, Stahlseile oder sonstige geeignete Zugelemente sein, welche eine entsprechende Belastung bei Betätigung aushalten. An einem Randbereich 13 der Hagelschutzanordnung ist eine Auf- und Abwickelvorrichtung 14 für die ersten Zugelemente 6 vorgesehen. Am gegenüberliegenden und in der Zeichnung nicht dargestellten Randbereich kann eine identische Auf- und Abwickelvorrichtung, welche ebenfalls in der Zeichnung nicht dargestellt ist, für die zweiten Zugelemente 7 vorgesehen sein.

An jedem Firstdraht 2 ist für jedes der ersten Zugelemente 6 ein erstes Führungselement 15 in Form eines Ringes vorgesehen. Das erste Führungselement 15 ist oberhalb des Hagelschutznetzes 3 angeordnet. Durch jedes erste Führungselement 15 hindurch verläuft der Firstdraht 2 und das erste Zugelement 6. Weiterhin ist im Bereich des oberen Endes der Pfosten 4 an jedem Firstdraht 2 für jedes zweite Zugelement 7 ein zweites Führungselement 16 vorgesehen. Das zweite Führungselement 16 ist unterhalb der Hagelschutznetze 3 angeordnet. Durch jedes zweite Führungselement 16 verläuft der Firstdraht 2 und das zweite Zugelement 7.

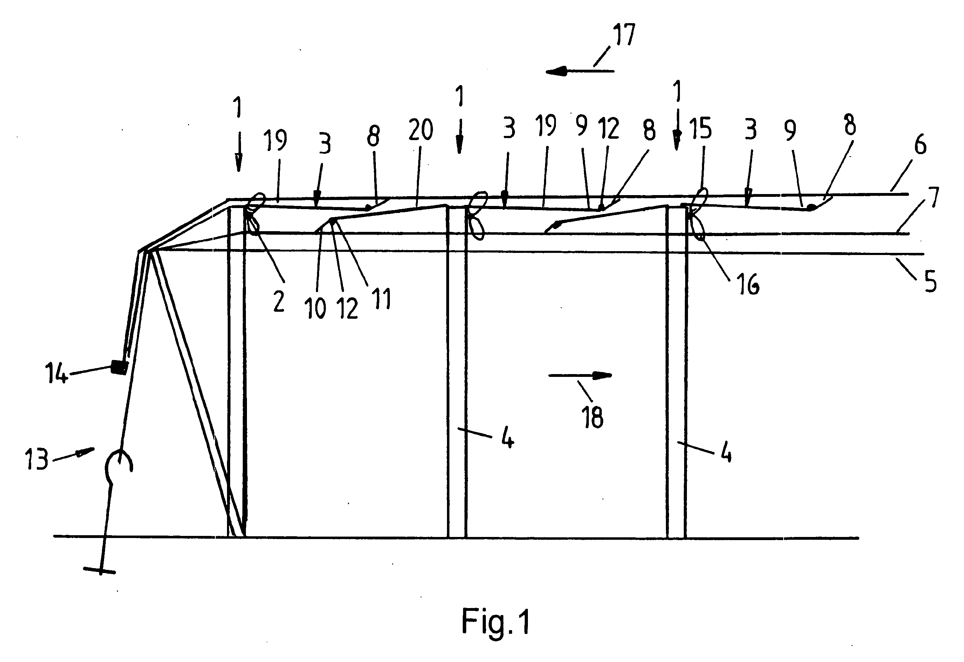

Bei der in Fig. 1 dargestellten Hagelschutzanordnung sind alle Hagelschutznetze 3 gespannt, d.h. sie befinden sich in Arbeitsposition. Wird nun das erste Zugelement 6 in Pfeilrichtung 17 entweder per Hand oder über die Auf- und Abwickelvorrichtung 14 gezogen, dann wird die erste Hälfte 19 jedes Hagelschutznetzes 3 aufgrund der ersten Verbindungselemente 8 ebenfalls in Pfeilrichtung 17 gezogen und so lange zusammengefaltet, bis die Hälfte 19 jedes Hagelschutznetzes 3 eine Ruheposition am oberen Ende jedes Pfostens 4 erreicht hat. Der gleiche Vorgang des Zusammenfaltens wird auch durch Ziehen des zweiten Zugelementes 7 in Pfeilrichtung 18 bewirkt, da hierbei die zweiten Verbindungselemente 10 die zweite Hälfte 20 jedes Hagelschutznetzes 3 bis in die Ruheposition mitnehmen. Die Hagelschutzanordnung ist nun geöffnet. Sollen die Hagelschutznetze 3 wieder geschlossen werden, dann wird das erste Zugelement 6 in Pfeilrichtung 18 gezogen und zieht die erste Hälfte 19 jedes Hagelschutznetzes 3 so lange mit sich, bis das Netz sich in seiner gespannten Position oder Arbeitsposition befindet. Die zweite Hälfte 20 jedes Hagelschutznetzes 3 wird durch Ziehen des zweiten Zugelementes 7 in Pfeilrichtung 17 gespannt, wobei aufgrund der Anordnung des ersten Zugelementes 6 oberhalb der Hagelschutznetze 3 und des zweiten Zugelementes 7 unterhalb der Hagelschutznetze 3 die zweite Hälfte 20 des Hagelschutznetzes 3 unter die erste Hälfte 19 des benachbarten Hagelschutznetzes 3 gezogen wird. Damit entsteht ein überlappender Bereich zwischen der ersten Hälfte 19 des Hagelschutznetzes 3 und der zweiten Hälfte 20 des benachbarten Hagelschutznetzes 3, wodurch verhindert wird, dass Lücken zwischen den angrenzenden Hagelschutznetzen 3 entstehen können. Mit den Zugelementen 6, 7 können die Hagelschutznetze 3 schnell geöffnet und geschlossen werden. Wenn alle Zugelemente 6, 7 mit den entsprechenden Auf- und Abwickelvorrichtungen 14 verbunden sind, dann könne alle Hagelschutznetze 3 der erfindungsgemäßen Hagelschutzanordnung auf schnelle Weise und zuverlässig geöffnet und geschlossen werden.

## Patentansprüche

1. Hagelschutzanordnung für Obstanlagen mit mehreren Pfostenreihen (1), wobei über jede Pfostenreihe (1) mindestens ein Firstdraht (2) und quer dazu an jedem Pfosten (4) ein Querdraht (5) verläuft und über jeder Pfostenreihe (1) ein Hagelschutznetz (3) angeordnet ist,
**dadurch gekennzeichnet,**
**dass** mindestens ein erstes, oberhalb der Hagelschutznetze (3) angeordnetes und parallel zum Querdraht (5) verlaufendes Zugelement (6) und mindestens ein zweites, unterhalb der Hagelschutznetze (3) angeordnetes und parallel zum Querdraht (5) verlaufendes Zugelement (7) jeweils zum Öffnen und Schließen der Hagelschutznetze (3) vorgesehen sind, wobei das mindestens eine erste Zugelement (6) über ein erstes Verbindungselement (8) mit einer ersten Längsseite (9) je eines Hagelschutznetzes (3) verbunden ist und das mindestens eine zweite Zugelement (7) über ein zweites Verbindungselement (10) mit der anderen zweiten Längsseite (11) desselben Hagelschutznetzes (3) verbunden ist.

2. Hagelschutzanordnung nach Anspruch 1,
**dadurch gekennzeichnet,**
**dass** jeweils zum Öffnen und zum Schließen der Hagelschutznetze (3) die Zugrichtung des mindestens einen ersten Zugelementes (6) zur Zugrichtung des mindestens einen zweiten Zugelementes (7) entgegengerichtet ist oder unter Verwendung einer Umlenkrolle für ein Zugelement (6, 7) gleichgerichtet ist.

3. Hagelschutzanordnung nach Anspruch 1 oder 2,
**dadurch gekennzeichnet,**
**dass** an jedem Firstdraht (2) für das mindestens eine erste Zugelement (6) ein erstes Führungselement (15) und für das mindestens eine zweite Zugelement (7) ein zweites Führungselement (16) vorgesehen sind.

4. Hagelschutzanordnung nach Anspruch 3,
**dadurch gekennzeichnet,**
**dass** das erste Führungselement (15) oberhalb der Hagelschutznetze (3) und das zweite Führungselement (16) unterhalb der Hagelschutznetze (3) angeordnet sind.

5. Hagelschutzanordnung nach einem der vorhergehenden Ansprüche,
**dadurch gekennzeichnet,**
**dass** benachbarte Hagelschutznetze (3) im Bereich zwischen den Pfostenreihen (1) überlappend angeordnet sind.

6. Hagelschutzanordnung nach einem der vorhergehenden Ansprüche,
**dadurch gekennzeichnet,**
**dass** die Verbindungselemente (8, 10) elastisch sind und ein Befestigungsmittel (12) zum Anbringen an den Hagelschutznetzen (3) aufweisen.

7. Hagelschutzanordnung nach einem der vorhergehenden Ansprüche,
**dadurch gekennzeichnet,**
**dass** mehrere erste Zugelemente (6) und mehrere zweite Zugelemente (7) vorgesehen sind.

8. Hagelschutzanordnung nach einem der vorhergehenden Ansprüche,
**dadurch gekennzeichnet,**
**dass** an mindestens einem Randbereich (13) die Hagelschutzanordnung eine Auf- und Abwickelvorrichtung (14) für mindestens die ersten Zugelemente (6) vorgesehen ist.

## Claims

1. Hail protection arrangement for orchards with a plurality of rows (1) of posts, at least one ridge wire (2) running over each row (1) of posts and a transverse wire (5) running transverse thereto on each post (4) and a hail protection net (3) being arranged over each row (1) of posts, **characterised in that** at least one first tension element (6) arranged above the hail protection nets (3) and running parallel to the transverse wire (5) and at least one second tension element (7) arranged below the hail protection nets (3) and running parallel to the transverse wire (5) are in each case provided to open and close the hail protection nets (3), the at least one first tension element (6) being connected by a first connection element (8) to a first longitudinal side (9) of one hail protection net (3) in each case and the at least one second tension element (7) being connected by a second connection element (10) to the other second longitudinal side (11) of the same hail protection net (3).

2. Hail protection arrangement according to claim 1, **characterised in that** to open and close the hail protection nets (3), in each case, the tension direction of the at least one first tension element (6) is directed counter to the tension direction of the at least one second tension element (7), or is directed in the same direction using a deflection roller for one tension element (6, 7).

3. Hail protection arrangement according to claim 1 or 2, **characterised in that** a first guide element (15) is provided on each ridge wire (2) for the at least one first tension element (6) and a second guide element (16) is provided for the at least one second tension element (7).

4. Hail protection arrangement according to claim 3, **characterised in that** the first guide element (15) is arranged above the hail protection nets (3) and the second guide element (16) is arranged below the hail protection nets (3).

5. Hail protection arrangement according to any one of the preceding claims, **characterised in that** adjacent hail protection nets (3) are arranged overlapping in the region between the rows (1) of posts.

6. Hail protection arrangement according to any one of the preceding claims, **characterised in that** the connection elements (8, 10) are elastic and have a fastening means (12) for attachment to the hail protection nets (3).

7. Hail protection arrangement according to any one of the preceding claims, **characterised in that** a plurality of first tension elements (6) and a plurality of second tension elements (7) are provided.

8. Hail protection arrangement according to any one of the preceding claims, **characterised in that** a winding and unwinding device (14) is provided for at least the first tension elements (6) at at least one edge region (13) of the hail protection arrangement.

## Revendications

1. Dispositif de protection contre la grêle, destiné à des vergers et comprenant plusieurs rangées (1) de poteaux, sachant qu'au moins un fil de crête (2) et, transversalement par rapport à ce dernier sur chaque poteau (4), un fil transversal (5) s'étendent au-dessus de chaque rangée (1) de poteaux, et qu'un filet (3) de protection antigrêle est disposé au-dessus de chaque rangée (1) de poteaux,
**caractérisé par le fait**
**qu'**au moins un premier élément de traction (6), placé au-dessus des filets (3) de protection antigrêle et s'étendant parallèlement au fil transversal (5), et au moins un second élément de traction (7), placé au-dessous desdits filets (3) de protection antigrêle et s'étendant parallèlement audit fil transversal (5), sont respectivement prévus pour l'ouverture et la fermeture desdits filets (3) de protection antigrêle, ledit premier élément de traction (6) à présence minimale étant relié, par l'intermédiaire d'un premier élément de liaison (8), à un premier côté longitudinal (9) d'un filet respectif (3) de protection antigrêle, et ledit second élément de traction (7) à présence minimale étant relié, par l'intermédiaire d'un second élément de liaison (10), à l'autre côté ou second côté longitudinal (11) du même filet (3) de protection antigrêle.

2. Dispositif de protection contre la grêle selon la revendication 1,
**caractérisé par le fait**
**que**, pour assurer respectivement l'ouverture et la fermeture des filets (3) de protection antigrêle, la direction de traction du premier élément de traction (6), à présence minimale, pointe en sens inverse de la direction de traction du second élément de traction (7) à présence minimale, ou pointe dans le même sens moyennant l'utilisation d'un galet de renvoi dédié à un élément de traction (6, 7).

3. Dispositif de protection contre la grêle selon la revendication 1 ou 2,
**caractérisé par le fait**
**qu'**un premier élément de guidage (15) et un second élément de guidage (16) sont respectivement prévus, sur chaque fil de crête (2), pour le premier élément de traction (6) à présence minimale et pour le second élément de traction (7) à présence minimale.

4. Dispositif de protection contre la grêle selon la revendication 3,
**caractérisé par le fait**
**que** le premier élément de guidage (15) et le second élément de guidage (16) sont placés, respectivement, au-dessus des filets (3) de protection antigrêle et au-dessous desdits filets (3) de protection antigrêle.

5. Dispositif de protection contre la grêle selon l'une des revendications précédentes,
**caractérisé par le fait**
**que** des filets voisins (3) de protection antigrêle sont agencés avec chevauchement dans la région située entre les rangées (1) de poteaux.

6. Dispositif de protection contre la grêle selon l'une des revendications précédentes,
**caractérisé par le fait**
**que** les éléments de liaison (8, 10) sont élastiques, et présentent un moyen de fixation (12) dévolu à la mise en place sur les filets (3) de protection antigrêle.

7. Dispositif de protection contre la grêle selon l'une des revendications précédentes,
**caractérisé par le fait**
**que** plusieurs premiers éléments de traction (6) et plusieurs seconds éléments de traction (7) sont prévus.

8. Dispositif de protection contre la grêle selon l'une des revendications précédentes,
**caractérisé par le fait**
**qu'**un système (14) d'enroulement et de déroulement, destiné au moins aux premiers éléments de traction (6), est prévu dans au moins une région marginale (13) dudit dispositif de protection contre la grêle.
